(19) Europäisches Patentamt / European Patent Office / Office européen des brevets

(11) **EP 4 524 490 A1**

(12) **EUROPEAN PATENT APPLICATION**
published in accordance with Art. 153(4) EPC

(43) Date of publication:
**19.03.2025 Bulletin 2025/12**

(21) Application number: **23803895.4**

(22) Date of filing: **12.05.2023**

(51) International Patent Classification (IPC):
*F24H 1/10* (2022.01)        *F24H 9/20* (2022.01)
*F16L 53/37* (2018.01)        *C10G 9/40* (2006.01)
*C10G 35/02* (2006.01)

(52) Cooperative Patent Classification (CPC):
C10G 9/40; C10G 35/02; F16L 53/37; F24H 1/10;
F24H 9/20

(86) International application number:
**PCT/KR2023/006509**

(87) International publication number:
**WO 2023/219472 (16.11.2023 Gazette 2023/46)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **12.05.2022  KR 20220058134**

(71) Applicant: **LG Chem, Ltd.
Yeongdeungpo-gu
Seoul 07336 (KR)**

(72) Inventor: **KANG, Moo Seong
Daejeon 34122 (KR)**

(74) Representative: **Goddar, Heinz J.
Boehmert & Boehmert
Anwaltspartnerschaft mbB
Pettenkoferstrasse 22
80336 München (DE)**

(54) **FLUID HEATING APPARATUS**

(57)     This specification describes a fluid heating device and a use thereof. The fluid heating device can solve the problems of the conventional fluid heating device. For example, the fluid heating device can efficiently respond to carbon neutrality. For example, the fluid heating device can deliver precisely controlled heat to the fluid within a short time even when heating a large amount of fluid. This specification also describes a method of heating a fluid using the fluid heating device.

[Figure 10]

EP 4 524 490 A1

## Description

[Technical Field]

This application claims the benefit of priority based on Korean Patent Application No. 10-2022-0058134 dated May 12, 2022, the disclosure of which is incorporated herein by reference in its entirety.
The present application relates to a fluid heating device and an application thereof.

[Background Art]

A device for heating a fluid can be used for a variety of uses.
For example, the device can be used in a process of producing basic raw materials of petrochemicals (e.g., olefins such as ethylene, propylene and butadiene).
In order to produce the olefins, a so-called cracking process of thermally decomposing raw materials, such as naphtha, ethane, propane, waste plastic, and biodiesel, obtained by refining crude oil in a high-temperature cracking furnace is performed, where the fluid heating device may be used in this process.
The cracking furnace for performing thermal decomposition generally comprises a radiation part, a convection part, and a steam generating device, and the like. A fluid, which is a raw material for thermal decomposition, can be thermally decomposed by high-temperature heat while being transported through a flow line such as a pipe. Generally, the thermal decomposition is performed by transferring large thermal energy to the fluid transported from the radiation part.
A conventional fluid heating device such as this cracking furnace is usually a large device, and in order to process a large amount of fluid due to the nature of the device, the heat has been transferred based on the entire pipe, which is a line through which the fluid flows. In addition, the heat transfer has been made through firepower generated by burning fossil fuels.
However, with this conventional method, it was not capable of uniformly transferring heat to the entire line through which the fluid flowed, controlling the aspect of heat applied to each portion of the line, or quickly heating the line.
Also, since the method of burning fossil fuels requires heating using convection, there is a problem that the configuration of the device is limited.
In addition, in the conventional method, a large amount of greenhouse gases such as carbon dioxide is emitted during the operation of the device due to the use of fossil fuels. This makes it difficult to achieve carbon neutrality for responding to climate change.
Furthermore, in the case of the conventional fluid heating device, since it takes a long time to bring the heating region to a steady state, the use of firepower becomes inefficient, and harmful gases such as greenhouse gases are additionally discharged in the process.

[Prior Art Documents]

[Patent Documents]

(Patent Document 1) Korean Laid-Open Patent Publication No. 10-2021-0042969.

[Disclosure]

[Technical Problem]

The present application is intended to provide a fluid heating device and a use thereof that can solve the problems of the conventional technology as described above.

[Technical Solution]

This specification describes a fluid heating device.
The fluid heating device may comprise: a fluid flow line including an inner passage formed to allow a fluid to flow and a conductive surface part surrounding the inner passage; and a coil part formed to be capable of generating an electromagnetic field capable of inducing heat generation to the conductive surface part through induction heating.
The fluid heating device may comprise: a fluid flow line including an inner passage formed to allow a fluid to flow and a conductive surface part surrounding the inner passage; a conductive structure present around the fluid flow line; and a coil part formed to be capable of generating an electromagnetic field capable of inducing heat generation to the conductive structure through induction heating, wherein the fluid flow line and the conductive structure may be formed such that a fluid in the fluid flow line can be heated by heat generation in the conductive structure.
In the fluid heating device, the fluid flow line may have a spiral structure.
In the fluid heating device, a ratio of the longest distance and the shortest distance among distances between the rotation axis of the spiral structure and the fluid flow line may be in a range of 0.8 to 1.2.
In the fluid heating device, a ratio H/R of the height H of one-time winding portion of the spiral structure to the shortest distance R between the rotation axis of the one-time winding portion and the fluid flow line in the one-time winding portion may be 2 or more.
In the fluid heating device, the spiral structure may satisfy Equation 1 below.

[Equation 1]

$$L = (H^2+(2\pi R)^2)^{1/2}$$

In Equation 1, L is the length of the one-time winding portion of the spiral structure, H is the height H of the one-time winding portion of the spiral structure, and R is the shortest distance between the rotation axis of the one-time winding portion and the fluid flow line in the one-time winding portion.

In the fluid heating device, the conductive structure may be present between the fluid flow line and the coil part.

The fluid heating device may further comprise a power supply part installed to be capable of applying direct current or alternate current to the coil part.

In the fluid heating device, the coil part may have a spiral structure, and a ratio of the longest distance and the shortest distance among distances between the rotation axis of the spiral structure of the coil and the coil may be in a range of 0.8 to 1.2.

In the fluid heating device, the coil part may have a spiral structure, and the rotation axis of the spiral structure of the coil part and the rotation axis of the spiral structure of the fluid flow line may coincide with each other.

In the fluid heating device, the coil part may have a spiral structure, and a ratio N1/N2 of the number N2 of windings in the spiral structure of the coil and the number N1 of windings in the spiral structure of the fluid flow line may be in a range of 0.75 to 1.5.

In the fluid heating device, the coil part may have a spiral structure, a ratio N1/N2 of the number N2 of windings in the spiral structure of the coil part and the number N1 of windings in the spiral structure of the fluid flow line may be in a range of 0.75 to 1.5, and the spiral structures of the coil part and the fluid flow line may exist on an imaginary line perpendicular to the rotation axis of the spiral structure of the coil part or the rotation axis of the spiral structure of the fluid flow line.

In the fluid heating device, the fluid flow line may have a form in which U-shaped lines are repeatedly connected, the conductive structure may be cylindrical, and the fluid flow line may be formed while surrounding the inner wall of the cylindrical conductive structure.

In the fluid heating device, the coil part may comprise a first coil part having a spiral structure and a second coil part having a spiral structure, where the first coil part may be present inside the fluid flow line having a spiral structure, and the second coil part may be present outside the fluid flow line having a spiral structure.

In the fluid heating device, the coil part may comprise a first coil part having a spiral structure and a second coil part having a spiral structure, where the first coil part may be present inside the fluid flow line, and the second coil part may be present outside the fluid flow line,

and the conductive structure may comprise first and second conductive structures, where the first conductive structure may be present between the first coil part and the fluid flow line, and the second conductive structure may be present between the second coil part and the fluid flow line.

[Effects of Invention]

The present application is intended to provide a fluid heating device that can resolve such problems of the conventional technology, and a use thereof.

[Brief Description of Drawings]

Figures 1, 10, 12, 14 and 15 are non-limiting examples of fluid heating devices described herein.

Figures 2, 3, 4 and 13 are non-limiting examples of shapes of fluid flow lines.

Figure 5 is a non-limiting example of a shape of a coil part.

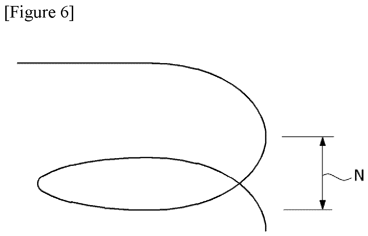

Figure 6 is an exemplary diagram for explaining a spiral structure.

Figures 7 to 9, and 11 are non-limiting examples of vertical cross-sections of fluid heating devices.

[Mode for Invention]

Among physical properties described in this specification, the physical properties in which the measurement temperature affects the measured value are the physical properties measured at room temperature, unless otherwise specified.

The term room temperature as used herein is a natural temperature that is not artificially heated or cooled, and may be, for example, any one temperature within a range of 10°C to 30°C. In another example, the room temperature may mean a temperature within the range of about 15°C or more, about 18°C or more, about 20°C or more, or about 23°C or more and about 27°C or less, or a temperature of approximately 25°C.

Unless otherwise specified, the unit of temperature described in this specification is Celsius (°C).

Among physical properties described in this specification, the physical properties in which the measurement pressure affects the measured value are the physical properties measured at normal pressure, unless otherwise specified.

The term normal pressure as used herein is a natural pressure that is not artificially pressurized or depressurized, and may mean a temperature in a range of, usually, about 730 mmHg to 790 mmHg.

In this specification, the term fluid means a flowable material. Normally, gases, liquids and plasma are treated as fluids.

A non-limiting example of a fluid to be heated by the fluid heating device described herein may be one or more selected from the group consisting of water, steam, air, and hydrocarbon compounds.

In one example, the fluid may be a material that is cracked by receiving thermal energy as an object to be heated, and a non-limiting example of such a fluid is a hydrocarbon compound. A non-limiting example of the hydrocarbon compound may include one or more selected from the group consisting of naphtha, ethane, propane, methane, waste plastic and biodiesel, and the like, and may include materials applicable according to common knowledge in the industry.

In one example, the fluid is an object to be heated, which may be a material used to perform the cracking, and a non-limiting example of such a fluid may include one or more selected from the group consisting of water, steam, and a catalyst.

In this specification, the term heating means that heat is transferred to any object (e.g., a fluid). The temperature of the object to which the heat is transferred generally rises, but in the case where an isothermal reaction or the like, or phase transition is experienced, heat may be transferred without increasing the temperature.

When the fluid flow line of the fluid heating device described in this specification is a reactor described below, the fluid may mean any one of a material before reaction or a material after reaction, or may mean both.

The fluid heating device described herein may be a part of other equipment. A non-limiting example of the other equipment may be one or more selected from the group consisting of a steam cracker, a reformer, and an alkane dehydrogenator. The fluid heating device described herein may be configured to perform at least one process in the other equipment.

In one example, the fluid heating device may be a part of a steam cracker. The steam cracker is a device that performs steam cracking, which may be equipment that converts a hydrocarbon compound with a long carbon chain into a hydrocarbon compound with a short carbon chain by applying thermal energy thereto. Here, a non-limiting example of the hydrocarbon compound with a long carbon chain may include one or more selected from the group consisting of naphtha, propane, butane, and ethane, and the like. Through the steam cracking, one or more selected from the group consisting of hydrogen, methane, ethane, ethylene, propylene, and butadiene, and the like may be produced.

In one example, the fluid heating device may be a part of a reformer. The reformer may mean equipment that produces one or more selected from the group consisting of steam and carbon oxides from one or more materials selected from the group consisting of natural gas, light gasoline, methanol, biogas, and biomass, and the like. Such a reformer may also be equipment that produces hydrogen from one or more selected from the group consisting of methane and carbon dioxide.

In one example, the fluid heating device may be a part of an alkane dehydrogenator. The alkane dehydrogenator may be equipment that produces alkene from alkane through a dehydrogenation process.

Hereinafter, the fluid heating device will be described in more detail with reference to drawings according to examples, but these are for easy understanding and the scope of the fluid heating device is not limited thereto. In addition, the examples shown in the drawings and the like of this specification may be for specific descriptions of specific constitutions, and the constitutions described in these drawings may be shown in different proportions from actual proportions.

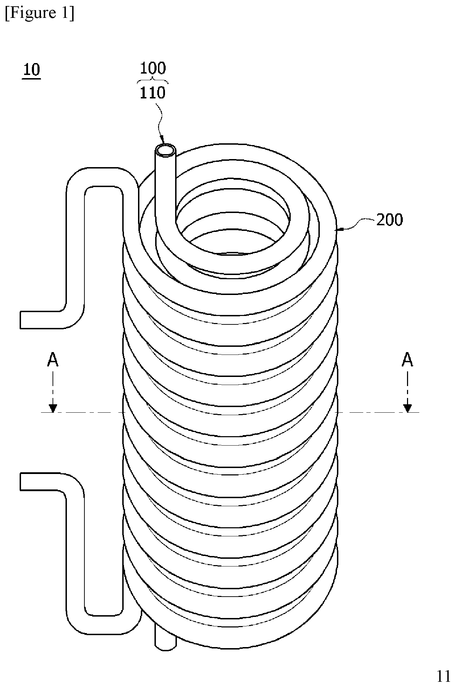

Figure 1 is a non-limiting example of a fluid heating device (10) described herein.

The fluid heating device (10) may comprise a heating part (100). In one example, the heating part (100) may be a region where a fluid to be heated is heated.

The heating part (100) may comprise a fluid flow line (110). The fluid flow line (100) may comprise an inner passage and a surface part surrounding the inner passage. The inner passage may be formed by the surface part. The inner passage may be formed so that the fluid may flow therethrough.

The heating part (100) of the fluid heating device (10) may comprise one or more fluid flow lines (110).

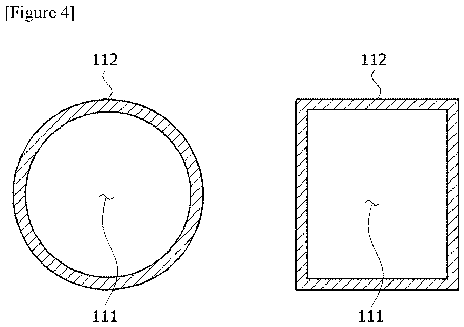

The fluid flow line (110) may comprise at least an inner passage and a surface part. Figure 4 is examples of cross-sectional shapes of fluid flow lines having such surface part (112) and inner passage (111). The surface part may exist in a form surrounding the inner passage, and the inner passage may be formed by the surface part.

The inner passage may be formed to allow a fluid to flow. The fluid may be an object to be heated by the fluid heating device.

The surface part may have conductivity. That is, the surface part may be formed of a conductive material. The term conductivity means a property that heat and/or electricity can flow. In one example, the surface part of the fluid flow line may be a material that has conductivity and generates heat by a so-called induction heating phenomenon when an electromagnetic field is applied. The induction heating is a phenomenon in which heat is generated in a specific material when an electromagnetic field is applied. For example, when an electromagnetic field is applied to a material having appropriate conductivity, so-called eddy currents are generated in the material, and Joule heating is generated by the eddy currents and the resistance of the material. In another example, the surface part of such a fluid flow line may be referred to as an induction heating surface part. The fluid flow line may be configured such that the surface part is a surface part generating heat by the induction heating, and the fluid flowing through the inner passage is heated by heat generation of the surface part.

In one example, when the fluid undergoes a chemical reaction by the heating, the fluid flow line may be referred to as a reactor, and the heating part may be referred to as a reaction part. Here, when the fluid flow line is referred to as a reactor, the fluid flow line may be an instrument, machine or equipment in which a chemical reaction is performed. The chemical reaction may mean a case where bonds between molecules and molecules or between elements are broken, or new bonds are formed between molecules and molecules or between elements.

The fluid flow line (110) may be configured in the most appropriate form by comprehensively considering physicochemical properties and mixing ratios of components included in the fluid to be heated in consideration of the purpose of heating, the flow rate or time required for the fluid, the operating cycle of the device and/or the type or size of the equipment comprising the device or included in the device, and the like.

There is no particular limitation on the type of material constituting the surface part, and materials known to be capable of generating heat by the induction heating phenomenon may be used. For example, a material having an appropriate level of conductivity capable of exhibiting the above effect and excellent durability against heat may be used. A non-limiting example of such a material includes one or more selected from the group consisting of nickel; chrome; and an alloy containing nickel and chromium, but is not limited thereto. In one example, the fluid flow line may be a pipe made of the material.

As described above, the fluid flow line (110) may comprise the surface part (112) and the inner passage (111). The inner passage (111) may be an empty space formed to allow the fluid to flow. The inner passage (111) may be configured so that the flow of the fluid is continuously made, or the flow of the fluid is maintained, but congestion occurs in at least a portion of the line for a certain period of time. It may be configured so that the velocity of the flow of the fluid is also kept constant or varies with the flow. The shape of the fluid flow may be controlled to show the most suitable result considering the purpose of heating the fluid. For example, when the fluid flow line is the above-described reactor, the fluid may also experience a chemical reaction while flowing through the inner passage, and/or may also be discharged after being introduced into the inner passage and then experiencing the chemical reaction stagnant in a certain region. The fluid may flow in a continuous stream, and, in some cases, may flow in a flow that is introduced for a chemical reaction, and then becomes stagnant, and flows out after experiencing the chemical reaction.

The cross-sectional shape of the fluid flow line (110) is not limited. Such a shape may be appropriately designed in consideration of the purpose of heating, and the type or mixing ratio of components included in the fluid to be heated. Figure 4 is examples of non-limiting cross-sectional shapes of the fluid flow lines (110). Of course, the fluid flow line (110) may have cross-sectional shapes which are not shown in Figure 4, for example, various shapes such as one or more selected from the group consisting of a triangle, a rhombus, a parallelogram, and an ellipse, and the like.

The shape and arrangement of the fluid flow line (110) in the heating part (100) of the fluid heating device (10) are not particularly limited. For example, the shape and arrangement may be designed in consideration of the purpose of heating and the components and/or mixing ratio of the fluid to be heated, and the like. For example, the fluid flow line (110) may be in a pipe form or a batch form.

In one example, the fluid flow line (110) may have a spiral structure in consideration of the location and shape for heat generation efficiency by an electromagnetic field applied from a conductive structure (120) and/or a coil part (200), which is described below. That is, the fluid flow line (110) may have a spirally wound structure. Regarding the fluid flowing in the fluid flow line (110), the total length of the fluid flow line (110) is determined in consideration of the residence time of the fluid, where in the case of adopting the spiral structure, a spatial efficiency may also be secured even at the same length. A non-limiting example of a fluid flow line (110) with such a spiral structure is shown in Figure 1. In consideration of appropriate effects, the spiral structure of the fluid flow line (110) may be a structure in which the distance from the rotation axis of the spiral structure to the fluid flow line (110) is maintained substantially constant.

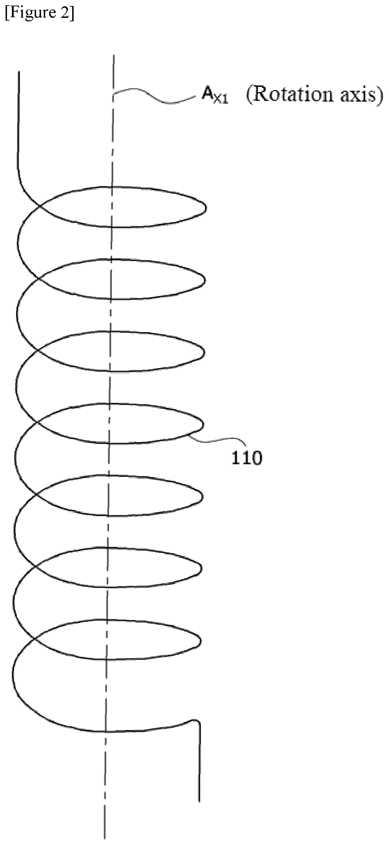

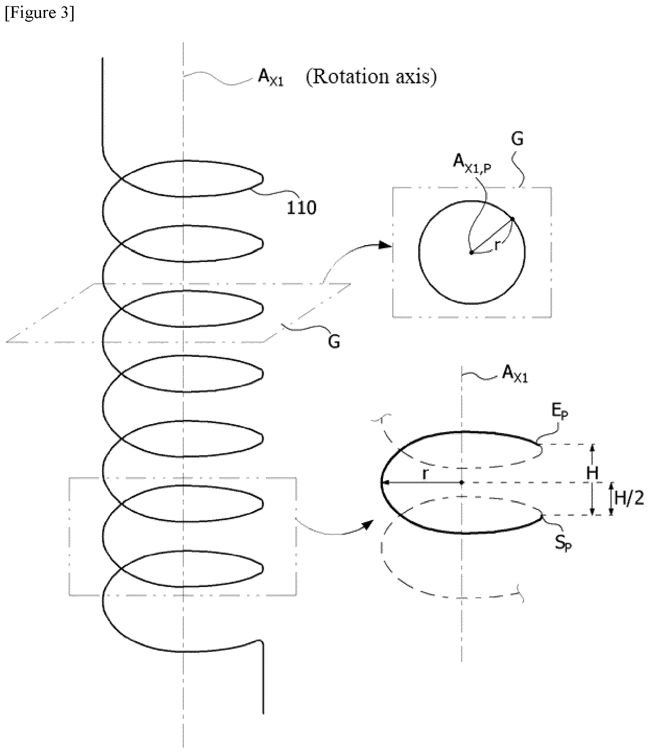

Figures 2 and 3 are exemplary diagrams for explaining the spiral structure. Figures 2 and 3 are non-limiting examples of fluid flow lines (110) with a spiral structure.

As shown in Figure 2, the spiral structure of the fluid flow line (110) may be a spirally wound structure around a predetermined rotation axis ($A_{X1}$). At this time, the matter that the distance from the rotation axis to the fluid flow line (110) is kept substantially constant may mean that a ratio (d11a/d11b) of the shortest distance (d11a) from any specific point of the fluid flow line (110) to the rotation axis ($A_{X1}$) and the shortest distance (d11b) from another specific point of the fluid flow line (110) to the rotation axis ($A_{X1}$) is 1, or is close to 1. For example, the lower limit of the ratio (d11a/d11b) may be 0.8, 0.85, 0.9, 0.95, or 1 or so, and the upper limit thereof may be 1.2, 1.15, 1.1, 1.05, or 1 or so. The ratio may be more than or equal to, or more than any lower limit of the above-described lower limits, may be less than or equal to, or less than any upper limit of the above-described upper limits, or may be in a range of more than or equal to, or more than any lower limit of the above-described lower limits, and simultaneously less than or equal to, or less than any upper limit of the above-described upper limits. By forming such a structure, the surface part of the fluid flow line (110) can efficiently generate heat by the electromagnetic field applied from the coil part, or can efficiently receive heat from a cylindrical structure to be described below.

In another example, the matter that the distance from the rotation axis to the fluid flow line (110) is kept substantially constant may mean that a ratio (L/S) of the longest distance (L) to the shortest distance (S) among distances between the rotation axis ($A_{X1}$) of the spiral structure of the fluid flow line (110) and the fluid flow line is 1, or is close to 1. Here, the distance between the rotation axis ($A_{X1}$) and the fluid flow line may be the shortest distance between the rotation axis ($A_{X1}$) of the spiral structure and the fluid flow line, which is described below. That is, in the spiral structure, several shortest distances between the fluid flow line and the rotation axis are defined around the rotation axis, where the matter that the ratio (L/S) of the longest distance (L) to the shortest distance (S) is 1, or is close to 1 may mean that the distance from the rotation axis to the fluid flow line (110) is maintained substantially constant. For example, the lower limit of the ratio (L/S) may be 0.8, 0.85, 0.9, 0.95, or 1 or so, and the upper limit thereof may be 1.2, 1.15, 1.1, 1.05, or 1 or so. The ratio may be more than or equal to, or more than any lower limit of the above-described lower limits, may be less than or equal to, or less than any upper limit of the above-described upper limits, or may be in a range of more than or equal to, or more than any lower limit of the above-described lower limits, and simultaneously less than or equal to, or less than any upper limit of the above-described upper limits. By forming such a structure, the surface part of the fluid flow line (110) can efficiently generate heat by the electromagnetic field applied from the coil part, or can efficiently receive heat from a cylindrical structure to be described below.

Figure 3 is a non-limiting example of a manner to design the fluid flow line (110). The fluid flow line (110) has a structure in which it is spirally wound around the rotation axis ($A_{X1}$), but the distance from the rotation axis ($A_{X1}$) to the fluid flow line (110) may not substantially change. Here, the rotation axis may be the center of gravity of the structure identified in the cross section confirmed when the fluid flow line is cut in a direction perpendicular to the twist direction of the spiral structure (i.e., the cross section confirmed when the fluid flow line (110) is cut along an arbitrary horizontal plane (G)). For example, as shown in Figure 3, if the cross section (G) identified when cut in a direction perpendicular to the twist direction of the spiral structure is circular, the rotation axis ($A_{X1}$) may be the center of the circle. As illustrated in Figure 3, the distance between one point ($A_{X1, P}$) of the rotation axis and the fluid flow line (110) is the distance between one point ($A_{X1, P}$) of the rotation axis identified in the cross section (G) and an arbitrary point (P) of the flow line (110). Since the fluid flow line (110) has a substantially predetermined thickness, the distance between one point ($A_{X1, P}$) of the rotation axis and an arbitrary point (P) of the fluid flow line (110) may be the shortest distance among the distances with one point of the rotation axis which can be defined from one point (P) of the fluid flow line (110). As shown in an example of Figure 3, when the winding shape of the spiral structure is circular, the distance (shortest distance) between one point ($A_{X1, P}$) of the rotation axis ($A_{X1}$) and one point (P) of the fluid flow line (110) may be the radius (r) of the circle. In this case, when the radii (r) obtained as above are each derived from all regions of the fluid flow line (110) and their average value is taken, the average value may be the radius ($R_L$) of the fluid flow line (110). In this case, the radius (r) may have the same meaning as the shortest distance from any specific point of the fluid flow line (110) to the rotation axis ($A_{X1}$) as described above.

Figure 3 also shows how to define one-time winding portion of the fluid flow line (110). As shown in Figure 3, the one-time winding portion of the fluid flow line (110) may be a portion where the fluid flow line (110) completes one rotation when viewed from the cross section (G). In Figure 3, the start point (SP) and the end point (EP) of the one-time winding portion of the fluid flow line (110) are indicated. Since the spiral structure is a structure progressing while being twisted, the shortest distance between the start point (SP) and the end point (EP) of the one-time winding portion may represent a rising degree (H) of the one-time winding portion of the fluid flow line (110). In the case of a circular shape as shown in Figure 3, the radius (r) of the one-time winding portion as described above may be the shortest distance between one point (P) of the fluid flow line (110) and the rotation axis ($A_{X1}$) at the 1/2 position of the rising degree (H).

In the fluid flow line (110), the rising degree (H) of the one-time winding portion of the fluid flow line (110) may be controlled to satisfy an appropriate relationship. For example, in the one-time winding portion of the fluid flow line (110), the ratio H/R of the following equation A including the rising degree (i.e., the height of the one-time winding portion) (H) may be adjusted in an appropriate level.

$$[\text{Equation A}]$$

$$H/R$$

In Equation A, H is the rising degree in the one-time winding portion (i.e., the height of the one-time winding portion) (H).

In Equation A, R is the shortest distance between the rotation axis of the one-time winding portion and the fluid flow line.

Here, as described above, the rotation axis of the one-time winding portion is the center of gravity of the cross-sectional structure identified when the one-time winding portion has been observed in the progress direction (rotation axis direction) of the spiral structure (in the case of Figure 3, the structure identified in the cross section is circular, so that the rotation axis is the center of the circle).

In the case of Figure 3, the shortest distance R is the radius r of the circle.

The lower limit of the ratio H/R may be 2, 2.1, 2.2, 2.3, 2.4, 2.5, 3, or 4 or so, and the upper limit thereof may be 20, 18, 16, 14, 12, or 10 or so. The ratio may be more than or equal to, or more than any lower limit of the above-described lower limits, may be less than or equal to, or less than any upper limit of the above-described upper limits, or may be in a range of more than or equal to, or more than any lower limit of the above-described lower limits, and simultaneously less than or equal to, or less than any upper limit of the above-described upper limits. As such, by controlling the height of the one-time winding portion, it can be designed so that the winding portions do not overlap each other, and through this, heat can be efficiently transferred to the fluid flowing in the fluid flow line (110).

The length (L) of the one-time winding portion in the fluid flow line (110) may be determined by the rising degree (H) of the one-time winding portion and the shortest distance R of Equation A above. The length (L) of the one-time winding portion of the fluid flow line (110) may be designed in consideration of the purpose of heating and the state of the fluid to be heated, and the like.

For example, the spiral structure may be designed to satisfy Equation 1 below.

[Equation 1]

$$L = (H^2 + (2\pi R)^2)^{1/2}$$

In Equation 1, L is the length of the one-time winding portion of the spiral structure, and H and R are as defined in Equation A.

While the ratio H/R of Equation A above satisfies the above-described range, the length of the one-time winding portion of the spiral structure may satisfy Equation 1 above.

In this case, the total length (T) of the fluid flow line (110) may be defined as the product of the length (L) of the one-time winding portion of Equation 1 and the number of revolutions (number of windings, N). When designing the fluid flow line (110), the shortest distance of the one-time winding portion of the fluid flow line (110) and/or the radius ($R_L$) of the fluid flow line (110) and the length (L) of the one-time winding portion may be designed accordingly by determining the total length (T) and the shortest distance R in the one-time winding portion, and considering the number of revolutions (the number of windings, N).

As illustrated in Figure 1, the fluid heating device (10) may further comprise a coil part (200). The coil part (200) is provided in the fluid heating device (10) to generate an electromagnetic field. Specifically, the coil part (200) may apply an electromagnetic field to the surface part of the fluid flow line (110) and/or a conductive structure to be described below, and may be formed so that through this, heat generation may be induced in the surface part and/or the conductive structure. Through this, the coil part (200) may be provided to surround the heating part (100) or the fluid flow line (110).

The coil part (200) may be designed to be capable of generating an electromagnetic field when a current flows. By applying such an electromagnetic field to the fluid flow line and/or a conductive structure to be described below, generation of resistance heat (Joule heat) may be induced through the induced current. The coil part (200) may be formed using a known coil capable of such a role.

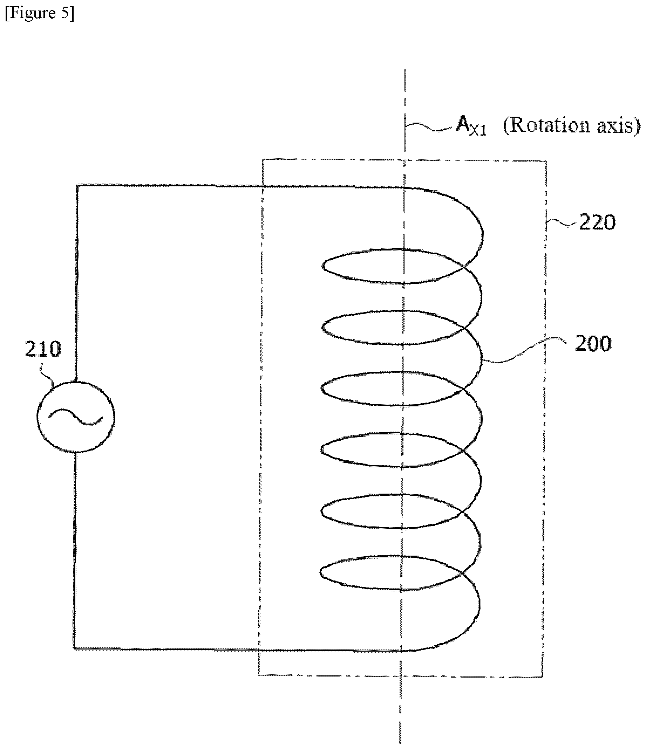

The current applied to the coil part (200) to form the electromagnetic field may be direct current or alternate current. In the case of the alternate current, the electromagnetic field may be generated more effectively. The direct current may mean a current flowing in a constant direction regardless of time, and the alternate current may mean a current that periodically changes in magnitude and phase with time. The current may be supplied through a power source (210). Thus, the coil part (200) may be connected to the power source. That is, the fluid heating device may further comprise a power supply part installed to be capable of applying direct current or alternate current to the coil part. Figure 5 is a diagram showing a non-limiting example of the coil part (200). As shown in Figure 5, the coil part (200) may be electrically connected to the power source (210) to receive the current, where if the current is direct current, it may be connected to a direct current power source, and if the current is alternate current, it may be connected to an alternate current power source. In the fluid heating device (10), the power source (210) is a device that forms a voltage to generate a current, which may be a direct current power source providing a voltage that does not depend on time to supply the direct current, or an alternate current power source providing a voltage that periodically changes in magnitude and phase to supply the alternate current. The magnitude of the supplied voltage or the intensity of the current may be appropriately selected in consideration of the purpose of heating and the fluid to be heated.

The coil part (200) may be selected in the most appropriate form by comprehensively considering the shape of the fluid flow line (110), the residence time of the fluid, the operation cycle, and the type and size of the equipment including the device.

In one example, the coil part (200) may have a spiral structure, or comprise a spiral structure, in consideration of the arrangement position and shape of the fluid flow line (110) and/or a conductive structure to be described below, and for efficiently utilizing heat generation in the line (110) and/or the conductive structure. That is, the coil may also have a spirally wound structure.

The coil part (200) may comprise a winding part (220) (the spiral structure) formed in a spirally wound structure. Like the fluid flow line (110), the spiral structure of the coil part (200) may also have a rotation axis. At this time, the meaning of the rotation axis is the same as the rotation axis the line (110). As in the case of the fluid flow line, even in the case of the spiral structure of the coil part (200), the distance from the rotation axis to the winding part (220) may be maintained substantially constant. Referring to Figure 5, the winding part (220) of the coil part (200) may have a structure in which it is spirally wound around the rotation axis ($A_{X2}$). Here, the meaning that the distance from the rotation axis to the winding part (220) is kept substantially constant is the same as the matter that the distance from the rotation axis to the fluid flow line is kept substantially constant in the fluid flow line, but the same meaning may be applied by changing the fluid flow line to the winding part (220). That is, even in the above case, a ratio (d22a/d22b) of the shortest distance (d22a) from any specific point of the winding part (220) of the coil part (200) to the rotation axis ($A_{X2}$) and the shortest distance (d22b) from another specific point of the winding part (220) to the rotation axis ($A_{X2}$) may be 1, or may be close to 1. For example, the lower limit of the ratio (d22a/d22b) may be 0.8, 0.85, 0.9, 0.95, or 1 or so, and the upper limit thereof may be 1.2, 1.15, 1.1, 1.05, or 1 or so. The ratio may be more than or equal to, or more than any lower limit of the above-described lower limits, may be less than or equal to, or less than any upper limit of the above-described upper limits, or may be in a range of more than or equal to, or more than any lower limit of the above-described lower limits, and simultaneously less than or equal to, or less than any upper limit of the above-described upper limits. In such a structure, it is possible to effectively induce the induction heating phenomenon.

In another example, the matter that the distance from the rotation axis to the winding part (220) is kept substantially constant may mean that a ratio (L/S) of the longest distance (L) and the shortest distance (S) among distances between the rotation axis ($A_{X2}$) of the spiral structure of the winding part (220) and the winding part (220) is 1, or is close to 1. Here, the distance between the rotation axis ($A_{X2}$) of the spiral structure and the winding part (220) may be the shortest distance between the rotation axis ($A_{X2}$) and the winding part (220), as in the case of the fluid flow line (110) described above. That is, in the spiral structure, several shortest distances between the winding part (220) and the rotation axis are defined around the rotation axis, where the matter that the ratio (L/S) of the longest distance (L) to the shortest distance (S) among several defined shortest distances is 1, or is close to 1 may mean that the distance from the rotation axis to the winding part (220) is maintained substantially constant. For example, the lower limit of the ratio (L/S) may be 0.8, 0.85, 0.9, 0.95, or 1 or so, and the upper limit thereof may be 1.2, 1.15, 1.1, 1.05, or 1 or so. The ratio may be more than or equal to, or more than any lower limit of the above-described lower limits, may be less than or equal to, or less than any upper limit of the above-described upper limits, or may be in a range of more than or equal to, or more than any lower limit of the above-described lower limits, and simultaneously less than or equal to, or less than any upper limit of the above-described upper limits. By forming such a structure, it is possible to efficiently generate an electromagnetic field, and through this, it is possible to induce an induction heating phenomenon.

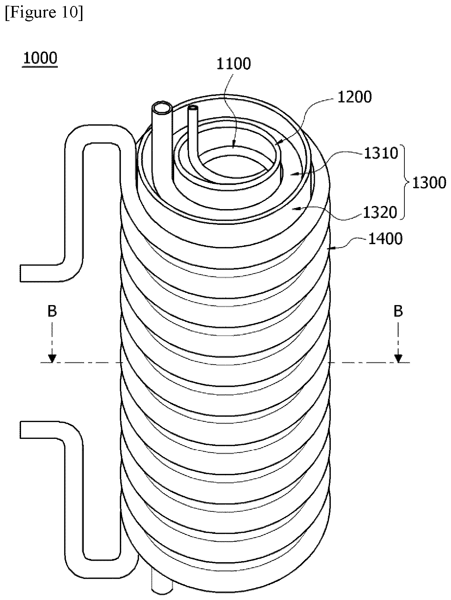

In the fluid heating device (10), when both the fluid flow line and the coil part have a spiral structure, and the coil part is present outside or inside the spiral structure of the fluid flow line, the rotation axis ($A_{X1}$) of the spiral structure of the fluid flow line and the rotation axis ($A_{X2}$) of the spiral structure of the winding part (220) of the coil part (200) may coincide with each other. Here, the coincidence of the rotation axes includes the case where two relevant rotation axes are formed at completely the same position, as well as the case that even if there is some difference, the difference is insignificant enough not to affect the desired effect, so that it can be seen as being substantially coincident. When the rotation axes $A_{X1}$ and $A_{X2}$ are aligned, a phenomenon in which the fluid flowing through the fluid flow line is unevenly heated can be prevented. Figure 1 is a non-limiting example of a case where the rotation axis ($A_{X1}$) of the spiral structure of the fluid flow line (110) and the coil part (200) coincides with the rotation axis ($A_{X2}$) of the winding part (220) of the coil part (200) as described above. Even when the coil part (1100) is present inside the fluid flow line (1310) as in Figure 10, the rotation axes of the coil part (1100) and the fluid flow line (1310) may coincide with each other.

Although it is not particularly limited, such a winding part (spiral structure) (220) of the coil part (200) may be designed in the same manner as the manner of designing the spiral structure of the fluid flow line (110) as described above. In the exemplary fluid heating device (10), when the fluid flow line (110) and the coil part (200) have a spiral structure and simultaneously the rotation axes $A_{X1}$ and $A_{X2}$ coincide, the fluid flow line (110) and the coil part (200) may have an appropriate separation distance (dB). The separation distance (dB) may be a difference between an average distance from the rotation axis ($A_{X1}$) to the fluid flow line (110) and an average distance from the rotation axis ($A_{X2}$) to the winding part (220) of the coil part (200). When the separation distance (dB) is maintained within an appropriate range, the fluid flowing in the fluid flow line may be more uniformly heated. The separation distance (dB) is a matter for the design of the fluid flow line and the coil part, which may select an appropriate separation distance in consideration of the purpose of heating and the fluid to be heated.

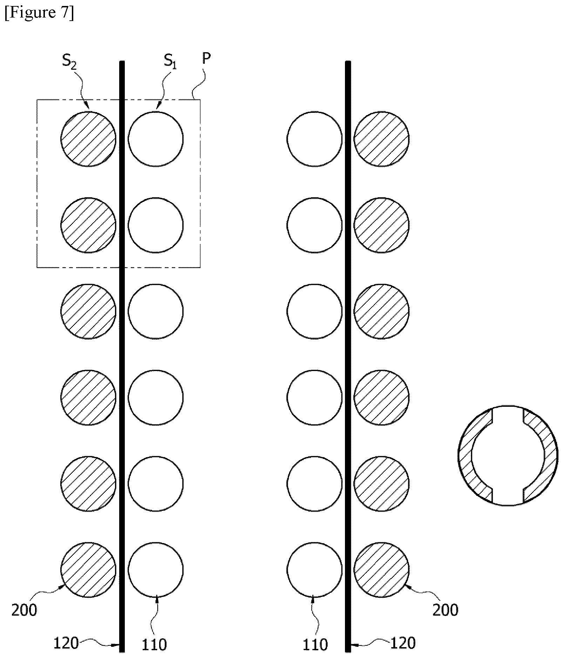

In the exemplary fluid heating device (10), when both the fluid flow line and the coil part have a spiral structure, the numbers of windings of the respective spiral structures may be approximately equal to each other. Here, the number of windings of the spiral structure approximately coincides with the number of completions of one rotation within the spiral structure, which may be, for example, the number of one-time winding portions of the spiral structure as described above. In another example, the number of windings may be a value obtained by dividing the number of spiral structures identified in a cross section obtained by cutting the spiral structure in a vertical plane including the rotation axis by 2. Such a cross section is illustrated, for example, in Figure 7, where in the case of Figure 7, the numbers of windings of the spiral structure (110) of the fluid flow line and the spiral structure (200) of the coil are 6, respectively. For example, the lower limit of the ratio (N1/N2) between the number (N1) of windings of the spiral structure of the fluid flow line (110) and the number (N2) of windings of the spiral structure of the coil part (200) may be 0.75, 0.8, 0.85, 0.9, 0.95, or 1 or so, and the upper limit thereof may be 1.5, 1.4, 1.3, 1.2 or 1.1, or 1 or so. The ratio may be more than or equal to, or more than any lower limit of the above-described lower limits, may be less than or equal to, or less than any upper limit of the above-described upper limits, or may be in a range of more than or equal to, or more than any lower limit of the above-described lower limits, and simultaneously less than or equal to, or less than any upper limit of the above-described upper limits. Through this design, it is possible to perform efficient induction of induction heating and transfer of heat to the fluid.

In the fluid heating device (10), when both the fluid flow line and the coil part have spiral structures, and any one of the two spiral structures exists inside or outside the other spiral structure, the pattern of each spiral structure may be adjusted. For example, in the above case, the cross section of the fluid flow line (110) ($S_1$ in Figure 7) and the cross section of the coil part (200) ($S_2$ in Figure 7) identified in the vertical cross section of the spiral structure may form a certain pattern (P). In the pattern (P), a ratio (Np/Nq) of the number (Np) of vertical cross sections of the fluid flow line (110) to the number (Nq) of vertical cross sections of the coil part (200) may be adjusted. Here, the vertical cross section is a cross section identified when the spiral structure is cut in a vertical plane including the rotation axis of the spiral structure as described above. For example, as described above, if the rotation axes $A_{X1}$ and $A_{X2}$ of the spiral structure of the fluid flow line (110) and the spiral structure of the coil part (200) coincide, the cross section when the spiral structure has been cut in a plane including any one of the rotation axes may be the vertical cross section. The lower limit of the ratio (Np/Nq) may be 0.75, 0.8, 0.85, 0.9, 0.95, or 1 or so, and the upper limit thereof may be 1.5, 1.4, 1.3, 1.2, or 1.1 or so. The ratio may be more than or equal to, or more than any lower limit of the above-described lower limits, may be less than or equal to, or less than any upper limit of the above-described upper limits, or may be in a range of more than or equal to, or more than any lower limit of the above-described lower limits, and simultaneously less than or equal to, or less than any upper limit of the above-described upper limits. Through this, heat generated from the surface part of the fluid flow line or a conductive structure to be described below can be uniformly and efficiently transferred to the fluid within the fluid flow line (110). If the ratio (Np/Nq) is too large, heating efficiency may decrease while heat is non-uniformly transferred to the fluid flow line (110), and if the ratio (Np/Nq) is too low, heating efficiency increases, but heat may not be transferred evenly.

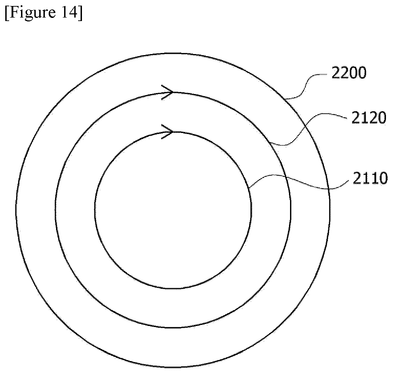

Figure 7 is a non-limiting example of the vertical cross section. Figure 7 is a diagram showing a state cut vertically along the AA' cross section, which is a cross section cut along the rotation axes ($A_{X1}$, $A_{X2}$) in the fluid heating device (10) shown in Figure 14. Referring to Figure 7, a vertical cross section (S1) of the fluid flow line (110) and a vertical cross section (S2) of the coil part (200) form a predetermined pattern (P). The vertical cross section of the fluid heating device (10) includes one or more of the patterns (P). In the pattern (P), the ratio (Np/Nq) of the number (Np) of vertical cross sections of the fluid flow line (110) to the number (Nq) of vertical cross sections of the coil part satisfies 1. At least one vertical cross section (S1) of the fluid flow line (110) and at least one vertical cross section (S2) of the coil part (200) are disposed parallel to each other. The fluid heating device (10) can transfer resistance heat efficiently to the fluid in the fluid flow line (110) by satisfying the ratio (Np/Nq) of the number (Np) of vertical cross sections of the fluid flow line (110) and the number (Nq) of vertical cross sections of the coil part to 1 while forming a pattern (P) when viewed in the vertical cross section, and furthermore, can transfer the resistance heat generated in the cylindrical structure (120) efficiently to the fluid in the fluid flow line (110) by disposing at least one of the vertical cross section (S1) of the fluid flow line (110) forming the pattern (P) and the vertical cross section (S2) of the coil part (200), respectively, parallel to each other. Such an effect may be further emphasized when a conductive structure (120) to be described below is present. The form shown on the rightmost side of Figure 7 is a heating pattern confirmed for one of the cross sections of the fluid flow line (110), and in this heating pattern, effective heat transfer is achieved.

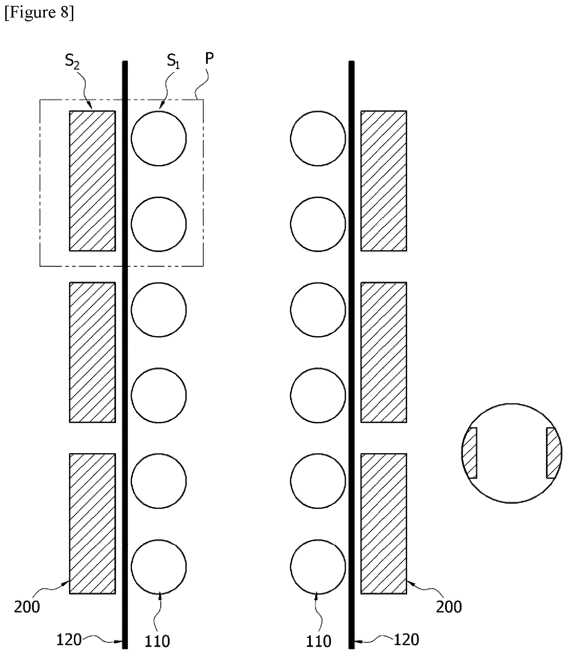

Figure 8 shows a case where the ratio (Np/Nq) is too large in the same state as in Figure 7. In the case of Figure 8, the ratio (Np/Nq) is 2 or so. The rightmost pattern in Figure 8 is the heating pattern of the cross section of the fluid flow line when the ratio (Np/Nq) is 2. In this heating pattern, heat is transferred only to a portion of the inner passage, which corresponds to inefficient transfer.

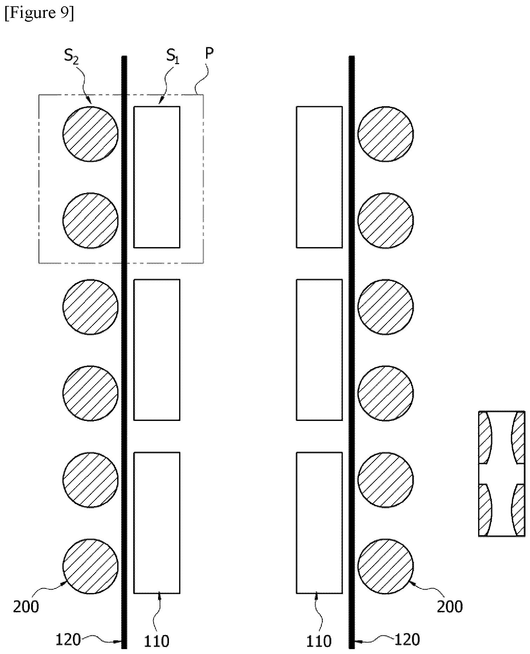

Figure 9 shows a case where the ratio (Np/Nq) is too low in the same state as in Figure 7. In the case of Figure 9, the ratio (Np/Nq) is about 0.5. Looking at the heating pattern shown on the rightmost side of Figure 9, discontinuous transfer of heat is confirmed.

In the structure capable of efficient heat transfer as shown in Figure 7, it can be achieved more effectively when both the coil part and the fluid flow line have spiral structures, and the spiral structures of the coil part and the fluid flow line are simultaneously present on an imaginary line perpendicular to the rotation axis of the spiral structure of the coil part and/or the rotation axis of the spiral structure of the fluid flow line, while the ratio N1/N2 of the number N2 of windings of the spiral structure of the coil part and the number N1 of windings of the spiral structure of the fluid flow line satisfies the aforementioned range.

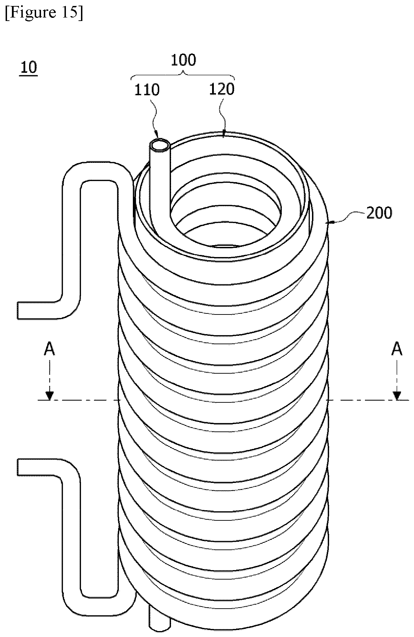

The fluid heating device may further comprise a conductive structure in the heating part. Such a conductive structure may exist, for example, around the fluid flow line in the heating part. For example, the conductive structure may have a cylindrical structure (120) shown in the non-limiting example of Figure 15. However, the shape of the conductive structure is not limited thereto. The conductive structure may be formed of a material that can generate resistance heat as induced current flows due to application of an electromagnetic field generated from the coil part (200), that is, a material that can be induction heated. Through this, the conductive structure may generate heat due to the electromagnetic field generated by the coil part (200), and the fluid flow line and the conductive structure may be formed so that the fluid in the fluid flow line may be heated by heat generation in the conductive structure. In an aspect in which the conductive structure exists, the surface part of the fluid flow line may also be a general surface part, and may be the induction heating surface part as described above. Also, in an aspect in which the conductive structure exists, the fluid flow line may have the spiral structure, or may also have another structure.

The conductive structure may be made of the same material as that of the induction heating surface part, which may comprise, for example, one or more selected from the group consisting of nickel; chrome; and an alloy containing nickel and chromium.

The heat (resistance heat, Joule heat) generated from the conductive structure may heat the fluid flowing into the fluid flow line (110). In addition, when the conductive structure surrounds the fluid flow line (110) like the cylindrical structure (120), uniform heat energy can be supplied to the fluid flowing through the fluid flow line (110). Through this, it is possible to prevent the case where the fluid flow line (110) is heated non-uniformly.

The fluid flow line (110) and the conductive structure may not be in contact with each other. Through this, it is possible to prevent a problem in which the fluid is heated unevenly because the temperature of the contact portion is higher than that of other portions.

In the fluid heating device (10), the fluid flow line (110) and the conductive structure may have a separation distance (dA) within an appropriate range. The separation distance (dA) may mean an average separation distance, and when the fluid flow line (110) has a spirally wound structure, it may also mean a difference between the average distance from the rotation axis ($A_{X1}$) to the fluid flow line (110) and the average distance from the rotation axis ($A_{X1}$) to the conductive structure. By maintaining the separation distance (dA) in an appropriate range, it is possible to prevent a problem of unevenly heating the fluid is heated unevenly. The separation distance (dA) is a matter for the design of the fluid flow line (110) and the conductive structure, which may be appropriately selected in consideration of the purpose of heating and the type of fluid to be heated.

As shown in Figure 15, when the coil part (200) is provided to surround the heating part (100) including the fluid flow line (110) and the conductive structure (cylindrical structure (120)) and has a spirally wound structure, and the fluid flow line (110) of the fluid heating device (10) has a spiral structure, the resistance heat generated in the conductive structure (cylindrical structure (120)) can be efficiently transferred to the fluid in the fluid flow line (110). Specifically, it is advantageous for the fluid flow line (110) to adopt a spirally wound structure in consideration of the residence time of the fluid, where in order to perform efficient heat transfer to the fluid flowing in the fluid flow line (110) having the spirally wound structure, it is advantageous that the coil part (200) also includes a spirally wound structure.

The fluid heating device (10) may further comprise a heat insulation part. The heat insulation part may be positioned between the heating part and the coil part. When the conductive structure is present, the heat insulation part may be positioned between the conductive structure and the coil part (200). The heat insulation part may prevent an influence of the heat by induction heating generated from the fluid flow line or the conductive structure to the coil part (200). It is appropriate to apply a material that does not have electromagnetic shielding performance in consideration of the efficiency of induction heating to the heat insulation part. The heat insulation part may be formed of an appropriate heat insulating material (e.g., zirconium) known in the industry, where the material is not particularly limited.

Figure 10 shows another non-limiting example of a fluid heating device (1000). Figure 10 is in a shape similar to the non-limiting example shown in Figure 1, but is a case where the coil part (1100) is also present inside the fluid flow line (1310). In this case, the above-described conductive structure (cylindrical structure (1200) in Figure 10) may or may not exist between the fluid flow line (1310) and the internal coil part (1100). Also, the above-described conductive structure (cylindrical structure (1320) in Figure 10) may exist between the fluid flow line (1310) and the external coil part (1400). However, the conductive structure does not necessarily have to exist. In the example of Figure 10, the coil parts (1400, 1100) and the fluid flow line (1310) have the aforementioned spiral structure. The above-described description may be equally applied to the spiral structure.

That is, in the aspect of the fluid heating device described in this specification, a case may be included, in which the coil part comprises a first coil part having a spiral structure and a second coil part having a spiral structure, wherein the first coil part is present inside the fluid flow line having the spiral structure, and the second coil part is present outside the fluid flow line having the spiral structure.

In addition, in the aspect of the fluid heating device described in this specification, a case is also included, in which the coil part comprises a first coil part having a spiral structure and a second coil part having a spiral structure, wherein the first coil part is present inside the fluid flow line, the second coil part is present outside the fluid flow line, and the conductive structure comprises first and second conductive structures, where the first conductive structure exists between the first coil part and the fluid flow line, and the second conductive structure also exists between the second coil part and the fluid flow line. In this case, the fluid flow line may or may not have the aforementioned spiral structure. Furthermore, the surface part of the fluid flow line may or may not be the aforementioned induction heating surface part.

The fluid heating device (1000) of Figure 10 is, as one non-limiting example of the above-described aspects, an example comprising: a heating part (1300) including a first coil part (1100) generating the electromagnetic field, a first conductive structure (cylindrical structure (1200)) provided to surround the first coil part (1100), a fluid flow line (1310) having an inner passage through which a fluid can flow, and a second conductive structure (cylindrical structure (1320)) surrounding the fluid flow line (1310) and provided to surround the first cylindrical structure (1200); and a second coil part (1400) provided to surround the heating part (1300) and generating an electromagnetic field.

The heating part (1300) including the fluid flow line (1310) and the second cylindrical structure (1320) may correspond to the heating part (100) including the fluid flow line (110) and the cylindrical structure (120) in the fluid heating device (10) of Figure 15 as described above, and the second coil part (1400) may correspond to the coil part (200) of the fluid heating device (10) according to the example of Figures 1 and 15 as described above. Therefore, the same descriptions as described above may be applied to the coil part (particularly the second coil part), the conductive structure (particularly the second conductive structure), and the fluid flow line.

In the fluid heating device of the above aspect, due to the electromagnetic field generated from one or more selected from the group consisting of the first coil part and the second coil part, the heat by induced current may be generated on one or more selected from the group consisting of the surface part of the fluid flow line, the first conductive structure, and the second conductive structure. The generated heat may heat the fluid flowing in the fluid flow line.

The first and second coil parts may be formed in the same manner as the above-described coil part capable of generating an electromagnetic field to enable induction heating.

The first and/or second coil parts may be formed to allow direct current or alternate current to flow, and may be formed, for example, so that alternate current flows.

The current may be supplied from a power source (not shown), and the first and/or second coil parts may be connected to the power source to allow the current to flow. The magnitude of voltage or the intensity of current supplied to the first and/or second coil part may be adjusted according to the purpose of heating and the fluid to be heated.

The first and/or second coil part may be designed in the most appropriate form by comprehensively considering the shape of the fluid flow line, the residence time of the fluid, the operation cycle, and the type and size of the equipment including the device.

The first and/or second coil part may also have the aforementioned spiral structure. In this case, regarding the specific shape of the spiral structure, for example, the number of windings or the shape of the rotation axis, the above-described contents may be applied through appropriate deformation if necessary.

For example, the first and second coil parts may also comprise a winding part formed in a spirally wound structure as described above and having a rotation axis, where the distance between the rotation axis and the winding part may be kept substantially constant. Also, when the fluid flow line has a spiral structure, the rotation axis may coincide with its rotation axis. Through this, the resistance heat generated by induction heating can be efficiently transferred to the fluid in the fluid flow line.

The first conductive structure of the fluid heating device may generate resistance heat as the induced current flows due to the electromagnetic field generated in the first and/or second coil part. The conductive structure may be formed in the same manner as the above-described conductive structure.

The resistance heat generated in the first conductive structure may heat the fluid flowing in the fluid flow line. In addition, when the first conductive structure is surrounded by the fluid flow line with the spiral structure, efficient and uniform heat transfer is possible by supplying uniform heat energy to the fluid flowing in the fluid flow line. In the above case, as a structure is formed in which the inside and outside of the fluid flow line with the spiral structure are surrounded by the conductive structure, the resistance heat generated in the conductive structure is transferred to the fluid in all directions, so that heat energy can be efficiently transferred to the fluid while preventing uneven heating.

In such a structure, the fluid heating device may further comprise a shielding part for shielding electromagnetic field interference between the first and second coil parts. By preventing a phenomenon that electromagnetic fields generated in the first and second coil parts interfere with each other to be offset or reinforced through the shielding part, it is possible to prevent uneven heating due to concentrated transfer of thermal energy only to a specific location in the fluid flow line. The shielding part may be applied without limitation as long as the material capable of shielding the electromagnetic field is used. In addition, the shield part may also be provided in a cylindrical shape as a separate constitution, and may be one or more selected from the group consisting of the first cylindrical structure (1200) and the second cylindrical structure (1320), which are the first and second conductive structures. One or more selected from the group consisting of the first cylindrical structure (1200) and the second cylindrical structure (1320) may serve as the shielding part for shielding electromagnetic fields, and in this case, a material may be selected and applied, in which it generates induced current due to electromagnetic fields while shielding the electromagnetic fields, and simultaneously generates resistance heat due to the induced current.

The fluid heating device may further comprise a heat insulation part. For example, the heat insulation part may be included in one or more selected from the group consisting of, for example, a position between the first conductive structure and the first coil part (1100) and a position between the second conductive structure and the second coil part (1400). The heat insulation part may prevent the resistance heat generated by flowing the induced current in the first conductive structure from affecting the first coil part and/or prevent the resistance heat generated by flowing the induced current in the second conductive structure from affecting the second coil part. It is appropriate that the heat insulation part has no electromagnetic shielding performance so that the electromagnetic field generated from the first and second coil parts does not prevent the induced current from flowing in the first and/or second conductive structure. The heat insulation part may be formed of a heat insulating material, where if it is the heat insulating material used in the industry, the type thereof is not particularly limited, and the heat insulating material may include zirconium.

In the fluid heating device (1000), all of the first coil part (1100), the fluid flow line (1310), and the second coil part (1400) may have a spirally wound structure in order to efficiently manage the heat generated from the first and second conductive structures (1200, 1320). Referring to Figure 10, in the exemplary fluid heating device (1000), it can be seen that all of the first coil part (1100), the fluid flow line (1310), and the second coil part (1400) have the spirally wound structures.

The first and second coil parts (1100, 1400) each comprise a winding part formed in a spirally wound structure. In all of the winding part of the first coil part (1100), the fluid flow line (1310), and the winding part of the second coil part (1400), regarding the respective rotation axes, the distances from the rotation axes can be maintained substantially constant, and through this, the resistance heat generated in the first and second cylindrical structures (1200, 1320) can be efficiently managed. All the respective rotation axes of the winding part of the first coil part (1100), the fluid flow line (1310), and the winding part of the second coil part (1400) may coincide with each other. By matching the rotation axes, it is possible to prevent the resistance heat generated in the first and second cylindrical structures (1200, 1320) is intensively transferred only to a specific location of the fluid flow line (1310) to result in uneven heating. Here, the meaning that the rotation axes coincide is as described above. Referring to Figure 10, while the first coil part (1100), the fluid flow line (1310), and the second coil part (1400) have a spirally wound structure, all the respective rotation axes coincide with each other, and the distances from the respective rotation axes are kept substantially constant.

In the fluid heating device (1000), the fluid flow line (1310) and the first conductive structure may not be in contact with each other, and in another example, the fluid flow line (1310), and each of the first conductive structure and the second conductive structure may not be in contact with each other. Through this, it is possible to prevent a problem that the fluid is heated unevenly.

In the fluid heating device (1000), the fluid flow line (1310) and the first cylindrical structure (1200) may have a separation distance (dC) within an appropriate range. The separation distance (dC) may mean an average separation distance, and when the fluid flow line (1310) has a spiral structure, it may also mean the difference between the average distance from the rotation axis of the fluid flow line (1310) to the fluid flow line (1310) and the average distance from the rotation axis of the fluid flow line (1310) to the first cylindrical structure (1200). By maintaining the separation distance (dC) in an appropriate range, it is possible to prevent a problem that the fluid is heated un-uniformly. Also, in the fluid heating device (1000), the fluid flow line (1310) and the second cylindrical structure (1320) may have a separation distance (dD) within an appropriate range. The separation distance (dD) may mean an average separation distance, and when the fluid flow line (1310) has a spiral structure, it may also mean the difference between the average distance from the rotation axis of the fluid flow line (1310) to the fluid flow line (1310) and the average distance from the rotation axis of the fluid flow line (1310) to the second cylindrical structure (1320). By maintaining the separation distance (dD) within an appropriate range, it is possible to prevent a problem that the fluid is heated non-uniformly. As described above, the separation distance (dC) and the separation distance (dD) are matters for the design of the fluid flow device, which may be appropriately designed in consideration of the purpose of heating and the type of fluid to be heated.

In the fluid heating device (1000), when the fluid flow line (1310) and the first coil part (1100) have a spiral structure, and simultaneously the rotation axis of the fluid flow line (1310) and the rotation axis of the winding part of the first coil part (1100) coincide with each other, the fluid flow line (1310) and the first coil part (1100) may have a separation distance (dX) within an appropriate range. The separation distance (dX) may mean the difference between the average distance between the rotation axis of the fluid flow line (1310) and the fluid flow line (1310) and the average distance between the rotation axis of the winding part of the first coil part (1100) and the first coil part (1100). By maintaining the separation distance (dX) within an appropriate range, it is possible to prevent a problem that the fluid is heated non-uniformly. Also, in the fluid heating device (1000) according to one example of the present application, when the fluid flow line (1310) and the second coil part (1400) have a spirally wound structure, and simultaneously the rotation axis of the fluid flow line (1310) and the rotation axis of the winding part of the second coil part (1400) coincide with each other, the fluid flow line (1310) and the second coil part (1400) may have a separation distance (dY) within an appropriate range. Here, the separation distance (dY) may mean the difference between the average distance between the rotation axis of the fluid flow line (1310) and the fluid flow line (1310) and the average distance between the rotation axis of the winding part of the second coil part (1400) and the winding part of the first coil part (1100). By maintaining the separation distance (dY) within an appropriate range, it is possible to prevent a problem that the fluid is heated non-uniformly. As described above, the separation distance (dX) and the separation distance (dY) are matters for the design of the device, which may be appropriately selected in consideration of the purpose of heating and the target of heating.

In the structure of the fluid heating device, when all of the first coil part, the fluid flow line, and the second coil part have a spirally wound structure, the ratio (N1/NA) of the number (N1) of windings of the fluid flow line and the number (NA) of windings of the first coil part and the ratio (N1/NB) of the number (N1) of windings of the fluid flow line and the number (NB) of windings of the second coil part may be adjusted. In this case, the meaning of the number of windings is as described above. For example, the lower limit of the ratio (N1/NA) may be 0.75, 0.755, 0.8, 0.85, 0.9, 0.95, or 1 or so, and the upper limit thereof may be 1.5, 1.4, 1.3, 1.2, 1.1, or 1 or so. The ratio (N1/NA) may be more than or equal to, or more than any lower limit of the above-described lower limits, may be less than or equal to, or less than any upper limit of the above-described upper limits, or may be in a range of more than or equal to, or more than any lower limit of the above-described lower limits, and simultaneously less than or equal to, or less than any upper limit of the above-described upper limits. For example, the lower limit of the ratio (N1/NB) may be 0.75, 0.755, 0.8, 0.85, 0.9, 0.95, or 1 or so, and the upper limit thereof may be 1.5, 1.4, 1.3, 1.2, 1.1, or 1 or so. The ratio (N1/NB) may be more than or equal to, or more than any lower limit of the above-described lower limits, may be less than or equal to, or less than any upper limit of the above-described upper limits, or may be in a range of more than or equal to, or more than any lower limit of the above-described lower limits, and simultaneously less than or equal to, or less than any upper limit of the above-described upper limits. When all of the first coil part, the fluid flow line, and the second coil part have a spiral structure, and the ratio (N1/NA) and the ratio (N1/NB) independently satisfy the above ranges, the resistance heat generated in the first and second cylindrical structures can be efficiently and uniformly transferred to the fluid in the fluid flow line.

In the fluid heating device (1000), when the fluid heating device (1000) has been viewed from the vertical cross sections, the vertical cross sections (SA) of the first coil part (1100), the vertical cross sections (SB) of the fluid flow line (1310), and the vertical cross sections (SC) of the second coil part (1400) form a certain pattern (P'), where in the pattern (P'), the ratio (NX/NY) of the number (NX) of vertical cross sections (SA) of the first coil part (1100) and the number (NY) of vertical cross sections (SB) of the fluid flow line (1310) may be within a predetermined range. Also, in the pattern (P'), the ratio (NYNZ) of the number (NY) of vertical cross sections (SB) of the fluid flow line (1310) and the number (NZ) of vertical cross sections (SC) of the second coil part (1400) may be within a predetermined range. The meaning of the vertical cross section is as described in Figure 7. For example, the lower limit of the ratio (NX/NY) may be 0.75, 0.8, 0.85, 0.9, 0.95, or 1 or so, and the upper limit thereof may be 1.5, 1.4, 1.3, 1.2, or 1.1 or so. The ratio may be more than or equal to, or more than any lower limit of the above-described lower limits, may be less than or equal to, or less than any upper limit of the above-described upper limits, or may be in a range of more than or equal to, or more than any lower limit of the above-described lower limits, and simultaneously less than or equal to, or less than any upper limit of the above-described upper limits. For example, the lower limit of the ratio (NY/NZ) may be 0.75, 0.8, 0.85, 0.9, 0.95, or 1 or so, and the upper limit thereof may be 1.5, 1.4, 1.3, 1.2, or 1.1 or so. The ratio may be more than or equal to, or more than any lower limit of the above-described lower limits, may be less than or equal to, or less than any upper limit of the above-described upper limits, or may be in a range of more than or equal to, or more than any lower limit of the above-described lower limits, and simultaneously less than or equal to, or less than any upper limit of the above-described upper limits. In the case where the ratio (NX/NY) and the ratio (NY/NZ) are each independently within the above range, when considering the structure of the fluid flow line (1310), the resistance heat generated in the first and second cylindrical structures (1200, 1320) can be efficiently transferred to the fluid in the fluid flow line (1310) with a uniform temperature distribution.

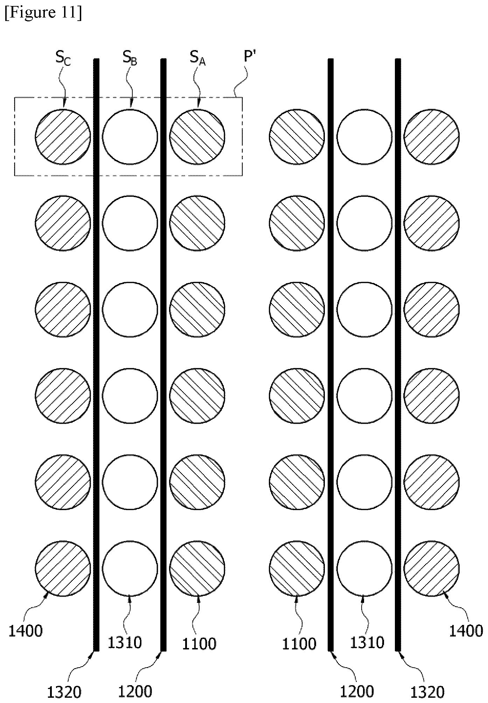

Figure 11 is a non-limiting example of a vertical cross section of the fluid heating device (1000). Figure 11 is a diagram showing a state cut vertically along a BB' cross section, which is a cross section taken along the rotation axes of the first coil part (1100), the fluid flow line (1310), and the second coil part (1400) in the fluid heating device (1000) of Figure 10 (the rotation axes of all of these coincide). Referring to Figure 11, it can be seen that the vertical cross section (SA) of the first coil part (1100), the vertical cross section (SB) of the fluid flow line (1310), and the vertical cross section (SC) of the second coil part (1400) form a certain pattern (P'). The vertical cross section of the fluid heating device (1000) comprises one or more patterns (P'). Also, in the pattern (P'), the ratio (NX/NY) of the number (NX) of vertical cross sections (SA) of the first coil part (1100) to the number (NY) of vertical cross sections (SB) of the fluid flow line (1310) and the ratio (NY/NZ) of the number (NY) of vertical cross sections (SB) of the fluid flow line (1310) and the number (NZ) of vertical cross sections (SC) of the second coil part (1400) each satisfy 1. At least one vertical cross section (SA) of the first coil part (1100), at least one vertical cross section (SB) of the fluid flow line (1310), and at least one vertical cross section (SC) of the second coil part (1400) are all disposed side by side. The fluid heating device (1000) can efficiently transfer the resistance heat generated in the first and second cylindrical structures (1200, 1320) to the fluid in the fluid flow line (1310), by satisfying the ratio (NX/NY) of the number (NX) of vertical cross sections (SA) of the first coil part (1100) and the number (NY) of vertical cross sections (SB) of the fluid flow line (1310) and the ratio (NY/NZ) of the number (NY) of vertical cross sections (SB) of the fluid flow line (1310) and the number (NZ) of vertical cross sections (SC) of the second coil part (1400), respectively, as 1 while forming the pattern (P') when viewed in the vertical cross section, and can efficiently transfer the resistance heat generated in the first and second cylindrical structures (1200, 1320) to the fluid in the fluid flow line (1310), by disposing at least one among the vertical cross sections (SA) of the first coil part (1100), the vertical cross sections (SB) of the fluid flow line (1310), and the vertical cross sections (SC) of the second coil part (1400), respectively, forming the pattern (P') side by side.

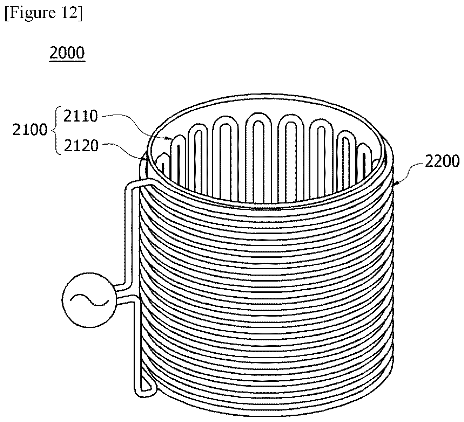

Figure 12 is another non-limiting example of the fluid heating device (2000).

The fluid heating device (2000) of Figure 12 may comprise a heating part (2100) including a fluid flow line (2110) having an inner passage through which a fluid can flow and a conductive structure (2120) surrounding the fluid flow line (2110); and a coil part (2200) provided to surround the heating part (2100) and generating an electromagnetic field.

Regarding the descriptions of the heating part (2100) including the fluid flow line (2110) and the conductive structure (2120); and the coil part (2200), the above-described contents may be appropriately modified and applied if necessary.

In the example of Figure 12, the fluid flow line (2110) has a structure in which U-shaped lines are repeatedly connected. In addition, the conductive structure (2120) has a cylindrical shape, and the fluid flow line (2110) is formed while surrounding the inner wall of the cylindrical conductive structure.

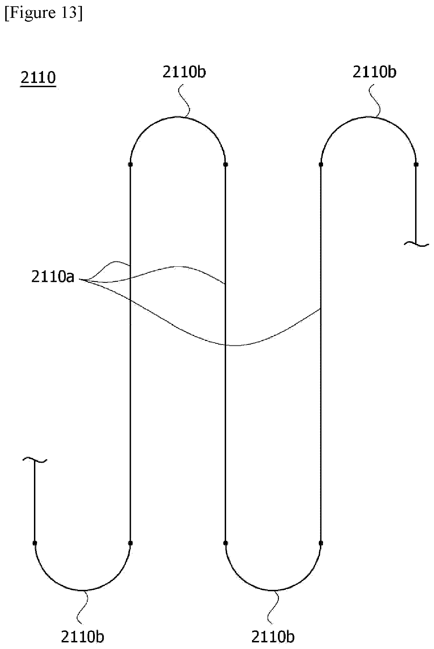

Here, as shown in a non-limiting example of Figure 13, the structure in which the U-shaped lines are repeatedly connected may mean a case where all of a plurality of straight lines (2110a) are connected through a connection part (2110b), but the connection part (2110b) shows a curved shape, thereby being a meandering shape as a whole. The fluid flow line (2110) comprises a plurality of straight lines (2110a), and the plurality of straight lines (2110a) is connected to the connection part (2110b) in a penetrated state at each end portion. Some of the straight lines (2110a) may be entry parts through which a fluid is introduced, and other portions may be discharge parts through which a fluid is discharged, where the entry part and the discharge part may not be connected by the connection part (2110b). As shown in Figure 13, the fluid flow line (2110) according to one example of the present application may be formed in a meandering shape while all of the plurality of straight lines (2110a) are connected through the connection part (2110b).

In the fluid heating device (2000), the fluid flow line (2110) may be disposed along an inner wall surface of the cylindrical structure (2120) while maintaining a predetermined distance from the cylindrical structure (2120). As shown in Figure 12, the fluid flow line (2110) is arranged along the inner wall surface of the cylindrical structure (2120) while being formed in a repeated U-shape, so that when the fluid heating device (2000) has been viewed from the top surface, the shapes of the fluid flow line (2110) and the cylindrical structure (2120) may be the same. Here, the meaning that the shapes are the same is a meaning that their shapes, such as circles or ellipses, are the same, and the size may be the same or different. Figure 14 is a diagram schematically showing the fluid heating device (2000) viewed from the top surface. As described above, the fluid flow line (2110) is formed in a meandering shape while all of the plurality of straight lines (2110a) are connected through the connection part (2110b), and simultaneously disposed along the inner wall surface of the cylindrical structure (2120), whereby the shape of the fluid flow line (2110) is shown in the same circular shape as the shape of the cylindrical structure (2120).

Even in this structure, it is possible to efficiently transfer the heat generated by induction heating to the fluid.

[Explanation of Reference Numerals]

10, 1000, 2000: fluid heating device

200, 2200: coil part

100, 1300, 2100: reaction part

1100: first coil part

110, 1310, 2110: fluid flow line

1400: second coil part

## Claims

1. A fluid heating device, comprising:

    a fluid flow line; and
    a coil part,
    wherein the fluid flow line comprises an inner passage formed to allow fluid to flow and a conductive surface part surrounding the inner passage,
    wherein the fluid flow line has a spiral structure; and
    wherein the coil part is configured to generate electromagnetic field configured to induce heat generation to the conductive surface part through induction heating.

2. A fluid heating device, comprising:

    a fluid flow line comprising an inner passage formed to allow fluid to flow and a conductive surface part surrounding the inner passage;
    a conductive structure present around the fluid flow line; and
    a coil part configured to generate electromagnetic field configured to induce heat generation to the conductive structure through induction heating,

    wherein the fluid flow line and the conductive structure are formed such that fluid in the fluid flow line is heated by the heat generation in the conductive structure.

3. The fluid heating device according to claim 2, wherein the fluid flow line has a spiral structure.

4. The fluid heating device according to claim 1 or 3, wherein a ratio of the longest distance and the shortest distance among distances between a rotation axis of the spiral structure and the fluid flow line is from 0.8 to 1.2.

5. The fluid heating device according to claim 1 or 3, wherein a ratio H/R of a height H of one-time winding portion of the spiral structure relative to the shortest distance R between a rotation axis of the one-time winding portion and the fluid flow line in the one-time winding portion is 2 or more.

6. The fluid heating device according to claim 5, wherein the spiral structure satisfies Equation 1 below:

[Equation 1]

$$L = (H^2 + (2\pi R)^2)^{1/2}$$

wherein, L is a length of the one-time winding portion of the spiral structure, H is a height H of the one-time winding portion of the spiral structure, and R is the shortest distance between the rotation axis of the one-time winding portion and the fluid flow line in the one-time winding portion.

7. The fluid heating device according to claim 2, wherein the conductive structure is present between the fluid flow line and the coil part.

8. The fluid heating device according to claim 1 or 2, further comprising a power supply part configured to apply direct current or alternate current to the coil part.

9. The fluid heating device according to claim 1 or 2, wherein the coil part has a spiral structure, and a ratio of the longest distance and the shortest distance among distances between a rotation axis of the spiral structure of the coil and the coil is from 0.8 to 1.2.

10. The fluid heating device according to claim 1 or 3, wherein the coil part has a spiral structure, and a rotation axis of the spiral structure of the coil part and a rotation axis of the spiral structure of the fluid flow line coincide with each other.

11. The fluid heating device according to claim 1 or 3, wherein the coil part has a spiral structure, and a ratio N1/N2 of the number N2 of windings in the spiral structure of the coil and the number N1 of windings in the spiral structure of the fluid flow line is from 0.75 to 1.5.

12. The fluid heating device according to claim 1 or 3, wherein the coil part has a spiral structure, wherein a ratio N1/N2 of the number N2 of windings in the spiral structure of the coil part and the number N1 of windings in the spiral structure of the fluid flow line is from 0.75 to 1.5, and wherein the spiral structures of the coil part and the fluid flow line exist on an imaginary line perpendicular to a rotation axis of the spiral structure of the coil part or a rotation axis of the spiral structure of the fluid flow line.

13. The fluid heating device according to claim 2, wherein the fluid flow line has a form in which U-shaped lines are repeatedly connected, wherein the conductive structure is cylindrical, and wherein the fluid flow line is formed while surrounding the inner wall of the cylindrical conductive structure.

14. The fluid heating device according to claim 1, wherein the coil part comprises a first coil part having a spiral structure and a second coil part having a spiral structure, where the first coil part is present inside the fluid flow line having a spiral structure, and the sec-

**EP 4 524 490 A1**

ond coil part is present outside the fluid flow line having a spiral structure.

15. The fluid heating device according to claim 2, wherein the coil part comprises a first coil part having a spiral structure and a second coil part having a spiral structure, where the first coil part is present inside the fluid flow line, and the second coil part is present outside the fluid flow line, and wherein the conductive structure comprises first and second conductive structures, where the first conductive structure is present between the first coil part and the fluid flow line, and the second conductive structure is present between the second coil part and the fluid flow line.

[Figure 1]

[Figure 2]

$A_{X1}$ (Rotation axis)

110

[Figure 3]

[Figure 4]

[Figure 5]

[Figure 6]

[Figure 7]

[Figure 8]

[Figure 9]

[Figure 10]

[Figure 11]

[Figure 12]

<u>2000</u>

[Figure 13]

2110    2110b    2110b

2110a

2110b    2110b

[Figure 14]

[Figure 15]

## INTERNATIONAL SEARCH REPORT

International application No.

**PCT/KR2023/006509**

### A. CLASSIFICATION OF SUBJECT MATTER

**F24H 1/10**(2006.01)i; **F24H 9/20**(2006.01)i; **F16L 53/37**(2018.01)i; **C10G 9/40**(2006.01)i; **C10G 35/02**(2006.01)i

According to International Patent Classification (IPC) or to both national classification and IPC

### B. FIELDS SEARCHED

Minimum documentation searched (classification system followed by classification symbols)

F24H 1/10(2006.01); A47J 31/54(2006.01); F24H 1/16(2006.01); G05D 23/19(2006.01); H05B 6/02(2006.01); H05B 6/06(2006.01); H05B 6/10(2006.01); H05B 6/36(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 유체(fluid), 가열(heating), 코일(coil), 파이프(pipe), 전도체(conductor), 나선(spiral)

### C. DOCUMENTS CONSIDERED TO BE RELEVANT

| Category* | Citation of document, with indication, where appropriate, of the relevant passages | Relevant to claim No. |
|---|---|---|
| X | KR 20-2010-0010664 U (YOO, Kwan Yull) 29 October 2010 (2010-10-29)<br>See paragraphs [0011], [0013], [0016] and [0041]-[0044] and figures 1 and 2. | 1,4-6,8-12 |
| Y | | 14 |
| Y | JP 2016-213074 A (TOKUDEN CO., LTD.) 15 December 2016 (2016-12-15)<br>See paragraph [0023] and figure 1. | 14,15 |
| X | KR 20-0352635 Y1 (PARK, Young Ja) 05 June 2004 (2004-06-05)<br>See paragraphs [0013], [0015], [0016], [0018], [0020], [0021] and [0025] and figure 1. | 2,3,7 |
| Y | | 13,15 |
| Y | JP 2008-232606 A (FUJI DENKI THERMOSYSTEMS K.K.) 02 October 2008 (2008-10-02)<br>See paragraphs [0042]-[0044] and figures 2A and 2B. | 13 |

☑ Further documents are listed in the continuation of Box C.  ☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **22 August 2023** | **22 August 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
| --- |
| **PCT/KR2023/006509** |

**C.    DOCUMENTS CONSIDERED TO BE RELEVANT**

| Category* | Citation of document, with indication, where appropriate, of the relevant passages | Relevant to claim No. |
| --- | --- | --- |
| X | US 2018-0249860 A1 (RHEAVENDORS SERVICES S.P.A.) 06 September 2018 (2018-09-06)<br>    See paragraphs [0031], [0039] and [0040] and figures 1 and 2. | 1,4-6,8-12 |
| A | JP 2008-107063 A (SHINKO SANGYO K.K. et al.) 08 May 2008 (2008-05-08)<br>    See paragraph [0020] and figure 1. | 1-15 |

Form PCT/ISA/210 (second sheet) (July 2022)

**INTERNATIONAL SEARCH REPORT**
**Information on patent family members**

International application No.

**PCT/KR2023/006509**

| Patent document cited in search report | | | Publication date (day/month/year) | Patent family member(s) | | | Publication date (day/month/year) |
|---|---|---|---|---|---|---|---|
| KR | 20-2010-0010664 | U | 29 October 2010 | None | | | |
| JP | 2016-213074 | A | 15 December 2016 | JP | 6494100 | B2 | 03 April 2019 |
| KR | 20-0352635 | Y1 | 05 June 2004 | KR | 10-0539453 | B1 | 11 January 2006 |
| | | | | KR | 10-2005-0092066 | A | 16 September 2005 |
| JP | 2008-232606 | A | 02 October 2008 | JP | 2012-088044 | A | 10 May 2012 |
| | | | | JP | 4918431 | B2 | 18 April 2012 |
| | | | | JP | 5310832 | B2 | 09 October 2013 |
| US | 2018-0249860 | A1 | 06 September 2018 | AR | 098234 | A1 | 18 May 2016 |
| | | | | AU | 2014-343411 | A1 | 02 June 2016 |
| | | | | AU | 2014-343411 | B2 | 14 February 2019 |
| | | | | BR | 112016009635 | A2 | 01 August 2017 |
| | | | | BR | 112016009635 | B1 | 29 June 2021 |
| | | | | CA | 2927660 | A1 | 07 May 2015 |
| | | | | CA | 2927660 | C | 28 September 2021 |
| | | | | CN | 105916413 | A | 31 August 2016 |
| | | | | CN | 105916413 | B | 30 August 2019 |
| | | | | DK | 2868242 | T3 | 18 March 2019 |
| | | | | EP | 2868242 | A1 | 06 May 2015 |
| | | | | EP | 2868242 | B1 | 02 January 2019 |
| | | | | ES | 2714305 | T3 | 28 May 2019 |
| | | | | HK | 1209299 | A1 | 01 April 2016 |
| | | | | HR | P20190513 | T1 | 03 May 2019 |
| | | | | HU | E042303 | T2 | 28 June 2019 |
| | | | | JP | 2016-539684 | A | 22 December 2016 |
| | | | | KR | 10-2016-0083867 | A | 12 July 2016 |
| | | | | KR | 10-2307890 | B1 | 01 October 2021 |
| | | | | LT | 2868242 | T | 12 March 2019 |
| | | | | PL | 2868242 | T3 | 28 June 2019 |
| | | | | PT | 2868242 | T | 04 March 2019 |
| | | | | RS | 58559 | B1 | 31 May 2019 |
| | | | | RU | 2016121036 | A | 05 December 2017 |
| | | | | RU | 2016121036 | A3 | 30 May 2018 |
| | | | | RU | 2672847 | C2 | 19 November 2018 |
| | | | | SI | 2868242 | T1 | 30 April 2019 |
| | | | | TW | 201521653 | A | 16 June 2015 |
| | | | | US | 10368688 | B2 | 06 August 2019 |
| | | | | US | 10939782 | B2 | 09 March 2021 |
| | | | | US | 2016-0287010 | A1 | 06 October 2016 |
| | | | | WO | 2015-063572 | A1 | 07 May 2015 |
| JP | 2008-107063 | A | 08 May 2008 | JP | 4928908 | B2 | 09 May 2012 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020220058134
- KR 1020210042969